# EUROPÄISCHE PATENTSCHRIFT

(11) **EP 1 339 980 B1**
(45) Veröffentlichungstag und Bekanntmachung des Hinweises auf die Patenterteilung: **27.12.2006**
(21) Anmeldenummer: 01999744.4
(22) Anmeldetag: 13.11.2001
(51) Int. Cl.: F02N 11/04, F02N 11/08, F02N 17/08

(54) **STARTEINHEIT FÜR EINE BRENNKRAFTMASCHINE**
START UNIT FOR AN INTERNAL COMBUSTION ENGINE
UNITE DE DEMARRAGE POUR MOTEUR A COMBUSTION INTERNE

(30) Priorität: 07.12.2000 DE 10060835
(43) Veröffentlichungstag der Anmeldung: 03.09.2003
(73) Patentinhaber: Schaeffler KG, 91074 Herzogenaurach (DE)
(72) Erfinder: BOGNER, Michael, 90542 Eckental (DE)
(86) Internationale Anmeldenummer: PCT/EP2001/013095
(87) Internationale Veröffentlichungsnummer: WO 2002/046607

(56) Entgegenhaltungen:
- EP-A- 1 001 163
- DE-A- 19 705 610
- US-A- 1 561 820
- US-A- 6 018 199
- PATENT ABSTRACTS OF JAPAN vol. 008, no. 191 (M-322), 4. September 1984 (1984-09-04) & JP 59 082575 A (MITSUBISHI DENKI KK), 12. Mai 1984 (1984-05-12)

## Beschreibung

### Gebiet der Erfindung

Die vorliegende Erfindung bezieht sich auf eine Brennkraftmaschine, deren Starteinheit einen Startergenerator umfasst, wobei dieses Aggregat abhängig vom Betriebsmodus zwei Funktionen einschließt. Während des Startvorgangs treibt der als Elektromotor arbeitende Startergenerator die Brennkraftmaschine an. Anschließend bei laufender Brennkraftmaschine stellt sich ein Generatorbetrieb des Startergenerators ein, bei dem dieses Aggregat elektrische Energie beispielsweise für eine Zündanlage eines Ottomotors sowie für das Bordnetz des Kraftfahrzeugs liefert.

### Hintergrund der Erfindung

Durch die Verwendung eines Aggregates, das sowohl die Startfunktion als auch die Generatorfunktion übemimmt, können Kosten durch eine verringerte Anzahl der Bauteile reduziert werden. Aus der DE 198 54 948 A1 ist ein Startergenerator bekannt, der einerseits über einen stimseitig an der Brennkraftmaschine angeordneten Zugmitteltrieb mit der Kurbelwelle der Brennkraftmaschine verbunden ist und andererseits über eine Antriebswelle und eine Verzahnung mit dem Schwungrad der Brennkraftmaschine in Verbindung steht. Der Zugmitteltrieb ist dabei mit einem Freilauf versehen, wodurch während des Startvorgangs der Startergenerator aus dem Zugmitteltrieb ausgekoppelt ist und der als Motor arbeitende Startergenerator über die Antriebswelle und das Schwungrad der Brennkraftmaschine den Startvorgang einleitet.

Das Dokument DE 197 05 610 A1 zeigt eine Brennkraftmaschine, die mit einer Schwung-Nutzautomatik zusammenwirkt und als Anlasseinrichtung einen konventionellen Elektoranlasser umfasst, der über einen Zahnkranz mit dem Schwungrad der Brennkraftmaschine verbunden ist sowie einen Startergenerator, der ebenfalls schwungradseitig zwischen der Brennkraftmaschine und einem automatisierten Getriebe angeordnet ist. Dieser komplexe Aufbau erfordert umfangreiche Sondereinrichtungen, verbunden mit hohen Mehrkosten. Außerdem bewirkt die Anordnung des Startergenerators einen nachteilig vergrößerten Einbauraum der aus der Brennkraftmaschine und dem automatisierten Schaltgetriebe bestehenden Baueinheit.

Die US-6 018 199 A bezieht sich ebenfalls auf eine Brennkraftmaschine, deren Starteinrichtung zwei getrennte Anlasser einschließt. Keiner der gemeinsam oder getrennt zu betätigenden Anlasser sind dabei über einen Zugmitteltrieb mit der Brennkraftmaschine verbunden.

Weiterhin sind riemengetriebene Startergeneratoren bekannt , bei denen sowohl bei dem Startmodus als auch bei dem Generatormodus der Antrieb ausschließlich über einen Riementrieb zwischen dem Startergenerator und der Brennkraftmaschine erfolgt. Abhängig von dem Betriebsmodus der Brennkraftmaschine wird ein Drehmoment von dem Startergenerator oder der Brennkraftmaschine über die entsprechende Riemenscheibe in das Zugmittel eingeleitet. Damit verbunden ist ein Wechsel des Leertrums und des Zugtrums in dem Zugmittel zwischen den Riemenscheiben der Kurbelwelle und des Startergenerators. Mit dieser Starteinheit soll ein Start der Brennkraftmaschine sowohl im warmen als auch im kalten Zustand realisiert werden. Bei groß dimensionierten Brennkraftmaschinen, die ein hohes Startmoment insbesondere bei tiefen Temperaturen erfordern, ergeben sich für derartige Starteinheiten Probleme, hinsichtlich der Größe des Startergenerators und der Drehmomenten- übertragung durch den Zugmitteltrieb.

### Zusammenfassung der Erfindung

Der vorliegenden Erfindung liegt die Aufgabe zugrunde, eine bauraumoptimiete Starteinrichtung der zuvor genannten Gattung derart auszubilden, dass die Starteinrichtung einen sicheren Start der Brennkraftmaschine unabhängig von den Temperaturen gewährleistet.

Erfindungsgemäß wird diese Aufgabe dadurch gelöst, dass temperaturabhängig oder in Abhängigkeit von einem Grenzdrehmoment in der Startphase die Brennkraftmaschine von dem Startergenerator allein oder in einer Kombination mit einem Elektroanlasser gestartet wird. Diese erfindungsgemäße Starteinrichtung vergrößert das bei einem Kaltstart der Brennkraftmaschine erforderliche Startmoment, welches das erforderliche Warmstartmoment deutlich übersteigt. Diese zwei Komponenten beinhaltende Starteinrichtung eignet sich insbesondere für großvolumig, in Fahrzeugen eingesetzte Brennkraftmaschinen.

Die erfindungsgemäße Starteinrichtung umfaßt einen an der Brennkraftmaschine schwungradseitig angeordneten Elektroanlasser sowie einen Startergenerator, der an dem vom Schwungrad abgewandten, stirnseitigen Ende der Brennkraftmaschine angeordnet ist. Der Elektroanlasser greift dabei in einer StartPhase mit einem Ritzel in einen Zahnkranz des Schwungrades ein. Der Startergenerator ist über ein Zugmittel mit der Brennkraftmaschine verbunden.

Der ausschließlich für einen Kaltstart benötigte, bevorzugt schwungradseitig der Brennkraftmaschine angeordnete Elektroanlasser kann vorteilhaft im Vergleich zu den bislang bekannten Brennkraftmaschinen, bei denen der Generator separat zum Anlasser getrennt angeordnet wurde, deutlich kleiner dimensioniert werden. Damit verbunden stellt sich ein Bauraum- und Kostenvorteil ein. Der als Hilfsaggregat dienende, dem Startergenerator zugeordnete Elektroanlasser besitzt außerdem einen Kostenvorteil gegenüber einem Zwischengetriebe, welches zwischen dem riemengetriebenen Startergenerator und der Kurbelwelle einer Brennkraftmaschine eingesetzt werden kann, um das für einen Kaltstart erforderliche erhöhte Kaltstartmoment zu realisieren. Ein derartiges, vorzugsweise als Planetengetriebe ausgelegtes Zusatzbauteil, verursacht zur Erzielung der geforderten Dauerfestigkeit hohe Herstellkosten. Außerdem erfordert das Getriebe einen vergrößerten Bauraum, verbunden mit einem nachteiligen Mehrgewicht sowie erhöhten Montagekosten.

Durch die Kombination eines Startergenerators mit einem kleiner dimensionierten Elektroanlasser, welcher unterstützend zum Startergenerator nur bei einem Kaltstart das notwendige Differenzmoment liefert, stellen sich geringere Systemkosten ein. Der Elektroanlasser kann folglich in einer verkleinerten Ausführung eingesetzt werden, was sowohl die Kosten als auch das Gewicht des Elektroanlassers reduziert.

Weiter vorteilhafte Ausgestaltungen der Erfindung sind Gegenstand der abhängigen Ansprüche 2 bis 9.

Die Erfindung sieht vor, daß der als Hilfseinrichtung für einen Kaltstart wirkende Elektroanlasser beispielsweise abhängig von der Temperatur der Brennkraftmaschine zugeschaltet wird. Dieser Indikator ermöglicht eine Anlaßhilfe, die sich unabhängig von der Umgebungstemperatur ausschließlich auf die momentane Bauteiltemperatur der Brennkraftmaschine stützt, welche das Startmoment unmittelbar beeinflußt. Als ideale Kenngröße der Brennkraftmaschinen-Temperatur kann die Schmieröltemperatur dienen. Alternativ kann auch die Kühlwassertemperatur der Brennkraftmaschine als Kenngröße für die Betätigung des Elektroanlassers dienen. Außerdem schließt die Erfindung eine Drehmomenterfassung bei dem Start ein, so dass der Elektroanlasser bei Überschreitung eines Grenzdrehmomentes zugeschaltet wird.

Eine weitere Ausgestaltung der Erfindung sieht eine automatisierte Betätigung des Elektroanlassers vor, die beispielsweise durch einen Temperaturgeber bzw. einem Thermostaten gesteuert ist. Die Erfindung schließt weiterhin ein, dass die automatische Betätigung des Elektroanlassers nach einer Totzeit zugeschaltet wird. Mittels eines Zeitglieds kann beispielsweise nach einer Zeitspanne von 1 Sekunde der Startvorgang des Startergenerators durch den Elektroanlasser unterstützt werden. Die Installation schließt weiterhin eine manuelle Einflußnahme auf die Betätigung des Elektroanlassers ein. Diese Maßnahme ermöglicht beispielsweise bei Bedarf einen beschleunigten Startvorgang im Vergleich zu einem ausschließlich vom Startergenerator ausgelösten Startvorgang.

Für die erfindungsgemäße Starteinrichtung ist als geeigneter Zugmitteltrieb ein Riementrieb vorgesehen, der alle Riemenscheiben des Triebs miteinander verbindet, und dem eine geeignete Spannvorrichtung zugeordnet ist.

Die Starteinrichtung gemäß der Erfindung schließt außerdem eine Abschaltautomatik und/oder eine Start - Stopeinrichtung ein, zur Reduzierung der Emission und des Kraftstoffverbrauchs in Betriebsphasen ohne Leistungsanforderung an die Brennkraftmaschine. Die Abschaltautomatik ist vorzugsweise kombiniert mit einer sogenannten Schwungnutzautomatik, bei der ein zuvor mit einem hinreichenden Schwungmoment ausgestattetes und dazu ausgekuppeltes Schwungrad wieder an die Kurbelwelle angekuppelt wird und durch Abgabe einer kinetischen Energie ein Neustarten der Brennkraftmaschine unterstützt. Bei einer langen Betriebspause wird das Schwungrad vor seinem Startankoppeln an die Brennkraftmaschine zunächst wieder hinreichend beschleunigt. Die Beschleunigung erfolgt dabei über den Startergenerator allein bzw. temperaturabhängig unterstützt durch den Elektroanlasser.

### Kurze Beschreibung der Zeichnungen

Zur Erläuterung der Erfindung dient die Zeichnung sowie eine Anlage, die nachfolgend näher beschrieben wird. Es zeigen:
- Figur 1: in einer schematischen Darstellung die erfindungsgemäße Starteinrichtung;
- Figur 2: In einem Flußdiagramm die Wirkungsweise der Starteinrichtung.

### Ausführliche Beschreibung der Zeichnungen

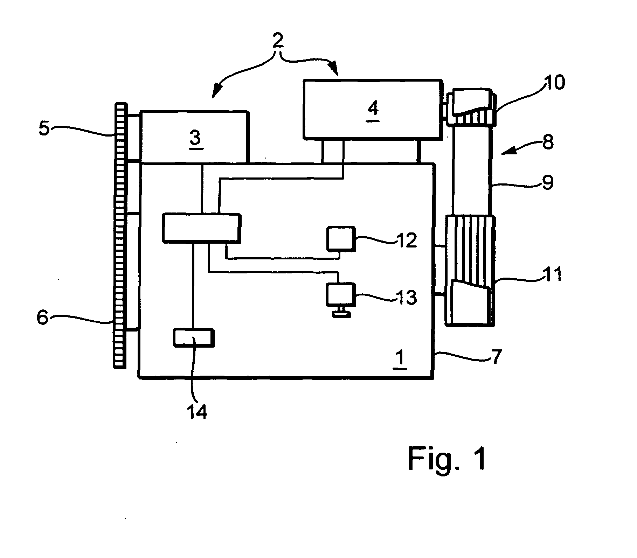

Die Figur 1 zeigt die Brennkraftmaschine 1; versehen mit einer Starteinrichtung 2, die eine Kombination eines herkömmlich gestalteten Elektroanlassers 3 sowie eines Startergenerators 4 umfaßt. Der Elektroanlasser 3 ist über ein Ritzel 5 mit einem Zahnkranz des Schwungrades 6 verbunden. An der von dem Schwungrad 6 abgewandten Stirnseite 7 der Brennkraftmaschine 1 ist ein Zugmitteltrieb 8 zum Antrieb des Startergenerators 4 vorgesehen. Dazu verbindet ein Zugmittel 9 die Riemenscheibe 10 des Startergenerators mit der in Verlängerung einer Kurbelwelle der Brennkraftmaschine 1 angeordneten Riemenscheibe 11. Der Start der Brennkraftmaschine 1 erfolgt bei einem Warmstart, d. h. bei hohen Umgebungstemperaturen bzw. bei einer geeigneten Bauteiltemperatur, insbesondere unter Berücksichtigung der Schmieröltemperatur, ausschließlich über den Startergenerator 4. Bei einem Kaltstart, verbunden mit einem erhöhten Startmoment, erfolgt eine Zuschaltung des Elektroanlassers 3, um das Startmoment zu erhöhen. Zur Erzielung einer automatisierten Zuschaltung des Elektroanlassers wird mit einem Geber 12 die Schmieröltemperatur der Brennkraftmaschine 1 erfaßt und bei einer Unterschreitung einer vorbestimmten Temperatur beim Startmodus der Elektroanlasser 3 automatisiert zugeschaltet. Weiterhin schließt die Starteinrichtung 2 einen manuellen Eingriff ein, mit dem von der Bedienungsperson über einen Schalter 13 beim Start der Brennkraftmaschine 1 unabhängig von der Schmieröltemperatur oder der Umgebungstemperatur der Elektroanlasser 3 zugeschaltet werden kann. Die Brennkraftmaschine 1 verfügt außerdem über eine Start-/Stopeinrichtung 14 bzw. Abschaltautomatik, die beispielsweise durch eine Gaspedalbetätigung oder Bewegung des Schalthebels den Startvorgang automatisch auslöst.

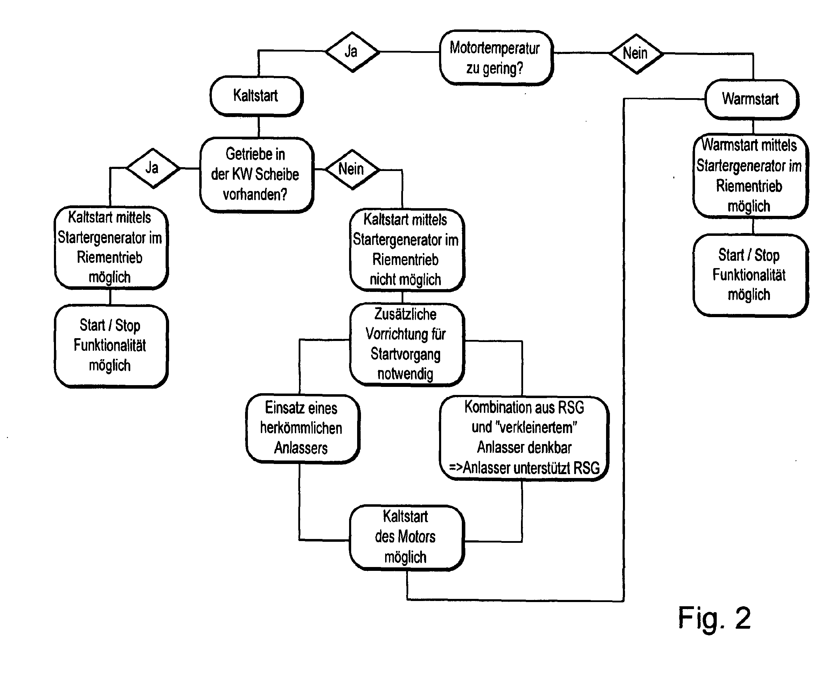

Die Figur 2 zeigt in einem Flußdiagramm die Wirkungsweise der Starteinrichtung 2, bei der abhängig von der Motortemperatur, insbesondere der Schmieröltemperatur der Brennkraftmaschine 1 der Startvorgang durch den Startergenerator 4 allein oder unterstützt durch den Elektroanlasser 3 erfolgt.

### Bezugszahlenliste

- 1: Brennkraftmaschine
- 2: Starteinrichtung
- 3: Elektroanlasser
- 4: Startergenerator
- 5: Ritzel
- 6: Schwungrad
- 7: Stirnseite
- 8: Zugmitteltrieb
- 9: Zugmittel
- 10: Riemenscheibe
- 11: Riemenscheibe
- 12: Geber
- 13: Schalter
- 14: Start-/Stopeinrichtung

## Patentansprüche

1. Brennkraftmaschine (1), versehen mit einer Starteinrichtung (2), die einen Startergenerator (4) zum Anlassen der Brennkraftmaschine (1) und zur Energieerzeugung bei laufender Brennkraftmaschine (1) umfasst, wobei temperaturabhängig und/oder in Abhängigkeit von einem Grenzdrehmoment in der Startphase ein Start der Brennkraftmaschine (1) von dem über einen Zugmitteltrieb (8) mit der Brennkraftmaschine (1) verbundenen Startergenerator (4) allein oder automatisiert in Kombination mit einem Elektroanlasser (3) erfolgt- wobei der Elektroanlasser (3) schwungradseitig und der Startergenerator (4) an der von einem Schwungrad (6) abgewanden Stirnseite (7) der Brennkraftmaschine (1) angeordnet ist.

2. Brennkraftmaschine nach Anspruch 1, wobei eine Temperatur der Brennkraftmaschine (1) ein Zusammenwirken des Startergenerators (4) mit dem Elektroanlasser (3) bestimmt.

3. Brennkraftmaschine nach Anspruch 1, mit einem automatisiert betätigten Elektroanlasser (3); in Abhängigkeit einer vorgegebenen Grenztemperatur.

4. Brennkraftmaschine nach Anspruch 1, wobei eine Zuschaltung des Elektroanlassers (3) abhängig von einer Zeitperiode oder Totzeit erfolgt.

5. Brennkraftmaschine nach Anspruch 1, wobei der Elektroanlasser mit einem Zahnkranz des Schwungrades (6) zusammenwirkt.

6. Brennkraftmaschine nach Anspruch 1 oder nach Anspruch 6, bei der der Zugmitteltrieb (8) als ein Riementrieb ausgebildet ist.

7. Brennkraftmaschine nach Anspruch 1, deren Starteinrichtung (2) mit einer Abschaltautomatik und/oder einer Start-/Stopeinrichtung (14) kombiniert ist.

## Claims

1. Internal combustion engine (1), provided with a starting device (2), which comprises a starter generator (4) for starting the internal combustion engine (1) and for generating power when the internal combustion engine (1) is running, wherein, depending on temperature and/or on a limit torque in the starting phase, starting of the internal combustion engine (1) is effected by the starter generator (4) alone, connected via a traction mechanism drive (8) to the internal combustion engine (1), or in an automated manner in combination with an electric starter (3), wherein the electric starter (3) is arranged at the flywheel end and the starter generator (4) is arranged at the end (7) of the internal combustion engine (1) remote from a flywheel (6).

2. Internal combustion engine according to Claim 1, wherein a temperature of the internal combustion engine (1) determines cooperation of the starter generator (4) with the electric starter (3).

3. Internal combustion engine according to Claim 1, having an electric starter (3) actuated in an automated manner, as a function of a predetermined limit temperature.

4. Internal combustion engine according to Claim 1, wherein connection of the electric starter (3) takes place as a function of a time period or idle time.

5. Internal combustion engine according to Claim 1, wherein the electric starter cooperates with a toothed rim of the flywheel (6).

6. Internal combustion engine according to Claim 1 or according to Claim 6, in which the traction mechanism drive (8) takes the form of a belt drive.

7. Internal combustion engine according to Claim 1, the starter device (2) of which is combined with an automatic disconnection means and/or a start/stop device (14).

## Revendications

1. Moteur à combustion interne (1), doté d'un dispositif de démarrage (2) qui comprend un démarreur-dynamo (4) pour démarrer le moteur à combustion interne (1) et pour produire de l'énergie lorsque le moteur à combustion interne (1) tourne, sachant que, en fonction de la température et/ou en fonction d'un couple limite pendant la phase de démarrage, le démarrage du moteur à combustion interne (1) s'effectue par le démarreur-dynamo (4) - relié au moteur à combustion interne (1) par l'intermédiaire d'une transmission (8) à moyen de traction - seul ou en combinaison de façon automatisée avec un démarreur électrique (3), sachant que le démarreur électrique (3) est disposé du côté du volant d'inertie et le démarreur-dynamo (4) sur le côté frontal (7) du moteur à combustion interne (1) qui est opposé au volant d'inertie (6).

2. Moteur à combustion interne selon la revendication 1, sachant qu'une température du moteur à combustion interne (1) détermine la coopération du démarreur-dynamo (4) avec le démarreur électrique (3).

3. Moteur à combustion interne selon la revendication 1, avec un démarreur électrique (3) actionné de façon automatisée en fonction d'une température limite prédéfinie.

4. Moteur à combustion interne selon la revendication 1, sachant que l'activation du démarreur électrique (3) s'effectue en fonction d'une période de temps ou d'un temps mort.

5. Moteur à combustion interne selon la revendication 1, sachant que le démarreur électrique coopère avec une couronne dentée du volant d'inertie (6).

6. Moteur à combustion interne selon la revendication 1 ou selon la revendication 6, dans lequel la transmission (8) à moyen de traction est réalisée sous forme de transmission par courroie.

7. Moteur à combustion interne selon la revendication 1, dont le dispositif de démarrage (2) est combiné à un dispositif automatique de désactivation et/ou à un dispositif de marche/arrêt (14).
